# EUROPEAN PATENT SPECIFICATION

(11) **EP 1 696 631 B1**
(45) Date of publication and mention of the grant of the patent: **06.06.2007**
(21) Application number: 06101499.9
(22) Date of filing: 11.02.2005
(51) Int. Cl.: H04L 29/06, H04Q 7/38

(54) **System and Method of Modifying Policy Settings in an Electronic Device**
System und Verfahren zur Veränderung der Einstellungsregeln in einem elektronischen Gerät
Système et Procédé pour le changement des règles de configuration dans un appareil électronique

(43) Date of publication of application: 30.08.2006
(62) Divisional of application: 05101037.9
(73) Proprietor: Research In Motion Limited, Waterloo, Ontario N2L 3W8 (CA)
(72) Inventor: Graham, Pearce, N2J 3W9, Waterloo (CA)
(74) Representative: Rickard, David John

(56) References cited:
- US-A- 5 884 193
- US-A- 6 081 731

## Description

The present invention relates generally to wireless telecommunication and more particularly to a system and method for modifying policy settings in an electronic device.

Mobile electronic devices (MEDs) capable of computing, information storage and communications are increasingly becoming commonplace. MEDs typically integrate the functions of personal information management such as calendaring, data communications such as e-mail and world wide web browsing and telecommunications into a single device. Research In Motion Limited of Waterloo, Ontario, Canada, and PalmOne, Inc. of Milpitas, California USA are two examples of manufacturers of such enhanced wireless electronic devices, and each offer a variety of products in this category.

A typical MED contains a communications interface for establishing wireless communications with telephony and data networks serving different geographic regions. In addition a typical MED contains a microcomputer which controls most of the functionality of the MED and aids in processing of information that the MED is presented with.

As part of its functionality, a MED is called upon to establish communications with a network through many different network access stations as the user of the MED roams through different geographic regions served by different network access station wireless carrier. Typically, each MED has a designated "home" region served by a "home" wireless carrier. All other regions are roaming regions. The characteristics of services provided when a MED accesses a network through its home region, as opposed to through a roaming region. Such service differences can include reduced connection security, reduced availability of certain types of communications such as bandwidth for data communications, and increased connection fees known as roaming charges. Moreover, the differences in service depends on the roaming region through which a connection is made. For example, availability of digital connections can vary from region to region.

Variability of service between the home region and the roaming regions can present a significant problem to MED users or employers who pay for the services on behalf of such users. Typically, a user who wants to establish secure connections or avoid roaming charges, for example, monitors his or her location and uses wireless communication only in the roaming regions where secure connections are offered or where no roaming charges are incurred. This requires a knowledge of the geographic region covered and services offered by the each network. Moreover, employers paying for user's services, unlike users, have no way of monitoring individual MED locations and hence rely on individual user's vigilance in order to ensure secure connections or avoid roaming charges.

US6081731 discloses a method, device and system for carrier denial in a cellular phone system. The system or mobile handsets maintain one or more databases which restrict certain calls being placed based on the carrier. Specifically, when a call is placed, and the call is not local, a carrier restriction function compares the carrier identification information contained in the call being placed with a list of restricted carriers for that handset. If the chosen cellular carrier cannot be used, i.e. if the carrier identification matches one of the stored restricted carriers or carrier types, then the call cannot be completed.

### GENERAL

Preferably, the present invention provides a novel system and method for secure access that obviates or mitigates at least one of the above-identified disadvantages of the prior art.

The problem is solved by the independent claims.

Preferred embodiments are given in the dependent claims.

### BRIEF DESCRIPTION OF THE DRAWINGS

The invention will now be described by way of example only, and with reference to the accompanying drawings, in which:
Figure 1 is a block diagram of a system for modifying communication policy in accordance with an embodiment of the invention;
Figure 2 is a block diagram of the mobile electronic device of Figure 1;
Figure 3 is a block diagram of certain internal components of a mobile electronic device of Figure 1;
Figure 4 is a flowchart depicting a method of updating information in accordance with an embodiment of the invention;
Figure 5 is a flowchart depicting a method of establishing communication according to policy in accordance with an embodiment of the invention;
Figure 6 is another arrangement of the system of Figure 1;
Figure 7 is a block diagram of a system for modifying communication policy in accordance with another embodiment of the invention; and
Figure 8 is a block diagram of a system for modifying communication policy in accordance with an embodiment of the invention.

### DESCRIPTION OF PREFERRED EMBODIMENTS

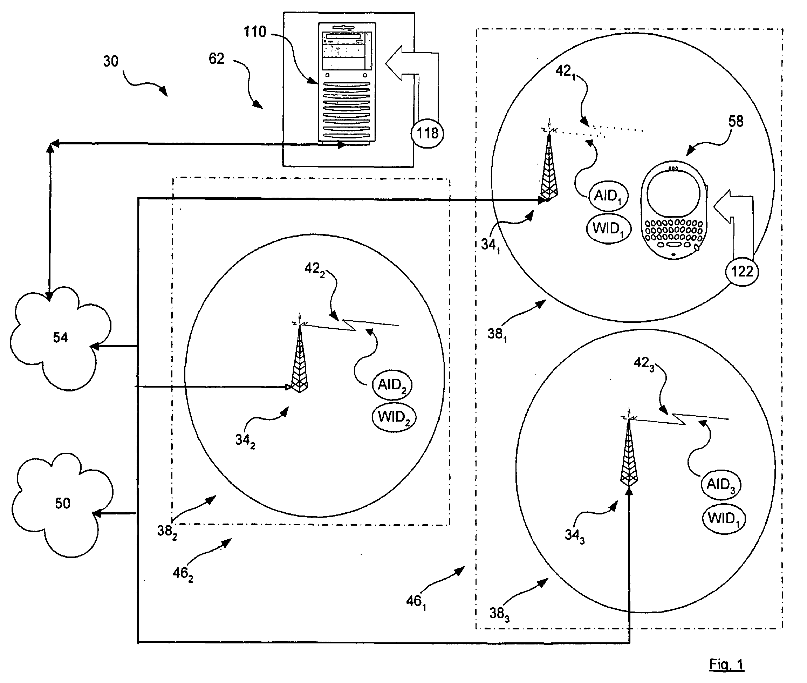

Referring now to Figure 1, a wireless communication system in accordance with a first embodiment of the invention is indicated generally at 30. System 30 comprises a plurality of access stations 34 operable to wirelessly transceive across a variety of geographic ranges 38. In a present embodiment, station 34₁ transceives across a first geographic range 38₁, station 34₂ transceives across range 38₂ and station 34₃ transceives across geographic range 38₃. Access stations 34 communicate wirelessly over a plurality of links 42. More specifically, station 34₁ covers first geographic range 38₁ by transmitting and receiving signals through link 42₁, station 34₂ covers second geographic range 38₂ through link 42₂ and base station 34₃ covers third geographic range 38₃ through link 42₃. Access stations 34 are operated by different wireless carriers 46. For example, stations 34₁ and 34₃ are operated by wireless carrier 46₁, whereas station 34₂ is operated by wireless carrier 46₂. In a present embodiment, system 30 is based on a known voice-based wireless telecommunication such as Global System for Mobile Communications ("GSM") or Advanced Mobile Phone System ("AMPS").

In system 30, access stations 34 are also connected to a network 50 and network 54 through a wired connection. In this embodiment network 50 is the public switched telephone network ("PSTN") and network 54 is the Internet, but in other embodiments other types of networks can be employed.

System 30 also includes a mobile electronic device 58. Device 58 is owned by office 62 and operated by persons associated with office 62. As will be described in greater detail below, device 58 is operable to connect to network 50 via a station 34's link 42 each time device 58 is located within a range respective to that access station 34. For example, whenever device 58 is located within geographic range 38₁, device 58 can connect to network 50 by linking with access station 34₁ through link 42₁, and whenever device 58 is located within geographic range 38₂, device 58 can connect to network 50 by linking with station 34₂ through link 42₂.

Various types of information can be communicated through a link 42, including voice communications, data communications, etc. In particular, links 42 each carry an wireless carrier identifier WID, that identifies the wireless carrier 46 operating the respective access station 34 that carries that particular link 42. For example, if device 58 is located within geographic range 38₁, or range 38₃ device 58 would receive identifier WID₁ through link 42₁. In addition, links 42 each carry an access station identifier AID, that identifies the access station 34 that carries that particular link 42. For example, if device 58 is located within geographic range 38₁, device 58 would receive identifier AID₁ through link 42₁. Furthermore, links 42 carry the phone number (or other unique identifier) associated with each device 58 that connects with an access station 34. For example, if device 58 is located within geographic range 38₁, station 34₁ would receive the phone number of device 58 through link 42₁. Moreover, links 42 can be based on any number of different wireless communication formats such as analog or digital depending on the type of wireless communication method used. For example, when station 34 employs GSM for wireless communication, link 42 established by that station is a digital link. When station 34 employs AMPS for wireless communication, link 42 established by that station is an analog link. Unlike analog links, which send signals using a continuous stream, digital links transmit the communications in packetized bit streams. Digital links 42 based on GSM offer enhanced security over analog links 42 based on AMPS. Interception and reconstruction of a digital link involves more highly specialized and expensive equipment than an analog link. Moreover, digital links 42 can be encrypted using methods such as stream ciphers, resulting in an encrypted communication between device 50 and access station 34. In this embodiment link 42₁ is a digital link, whereas links 42₂ and 42₃ are analog links. As such, link 42₁ is inherently more secure then links 42₂, and 42₃.

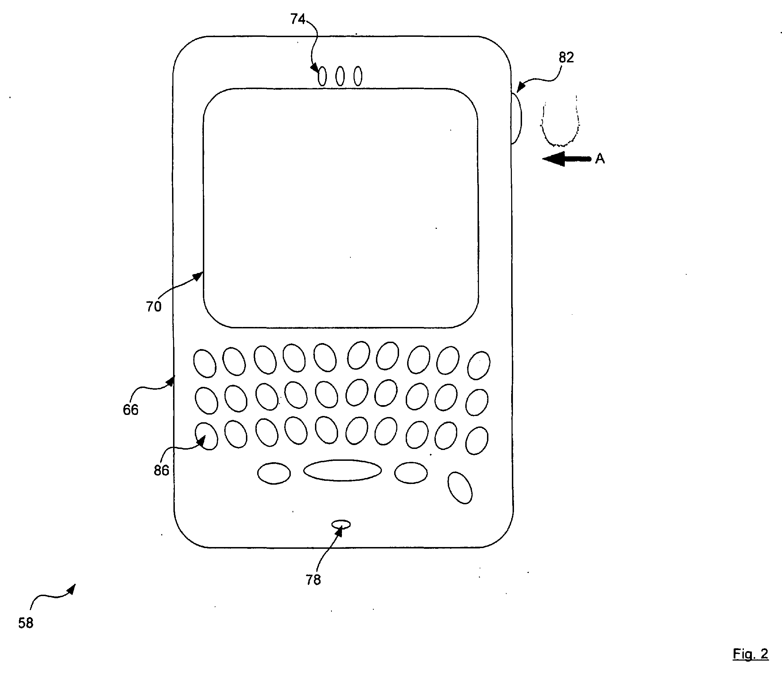

Referring now to Figure 2, device 58 is shown in greater detail. Device 58 is based on the computing environment and functionality of a personal digital assistant with wireless voice telephony capabilities. However, it is to be understood that device 58 can be based on the construction and functionality of any mobile electronic device that can be connected to a wireless network as well. Such devices include cellular telephones or laptops computers connected to wireless networks. In a present embodiment, electronic device 58 includes, a housing 66, which frames an LCD display 70, a speaker 74, a microphone 78, a trackwheel 82, and a keyboard 86. Trackwheel 82 can be inwardly depressed along the path of arrow "A" as a means to provide additional user-input. It will be understood that housing 66, can be made from any suitable material as will occur to those of skill in the art.

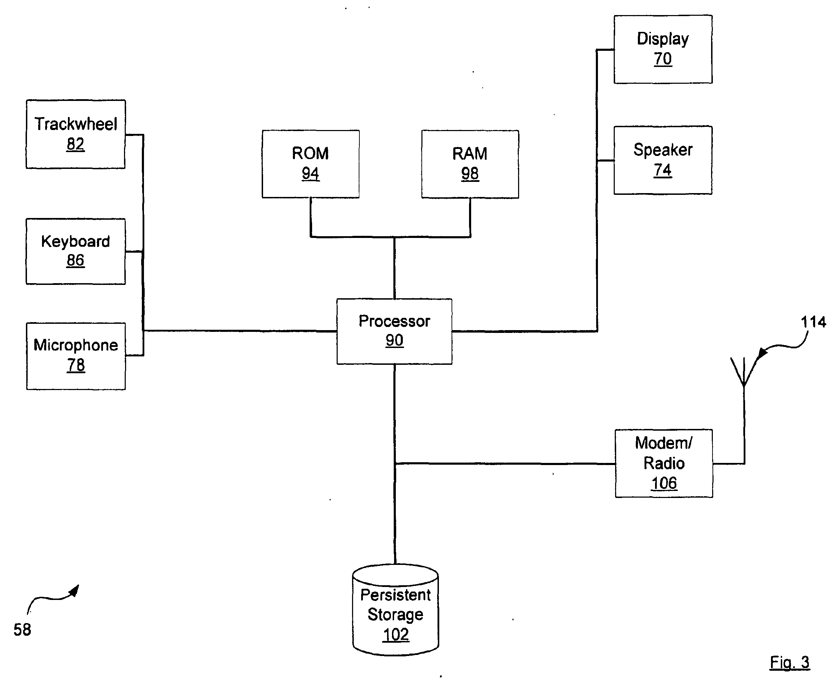

Referring now to Figure 3, a block diagram of certain internal components within device 58 are shown. Device 58 is based on a microcomputer that includes a processor 90. Processor 90 is connected to a read-only-memory ("ROM") 94, which contains a plurality of applications executable by processor 90 that enables device 58 to perform certain functions. Processor 90 is also connected to a random access memory unit ("RAM") 98 and a persistent storage device 102 which is responsible for various nonvolatile storage functions of device 58. Processor 90 can send output signals to various output devices including display 70 and speaker 74. Processor 90, can also receive input from various input devices including microphone 78 and keyboard 86. Processor 90 is also connected to a modem and radio 106. Modem and radio 106 are operable to connect device 58 to wireless access stations 34 in range of device 58, in the usual manner, via an antenna 114.

Referring back to Figure 1, office server 110 is a computing device, (such as a personal computer, a server, or the like) that is typically comprised of hardware suitable for server type functions, and includes a central processing unit, random access memory, hard-disk storage and a network interface for communicating over network 54. Office server 110 stores the office connection policy ("CP") database 118, used for determining which access stations 34 a device 58 can link with in order to connect to a network. Table I shows the initial settings of an example CP database 118 of office 62 for device 58 when it attempts to connect to network 50, namely when a wireless voice call is being made.

**Table I**

| Example record of a CP Database 118 of Office 62 | | |
|---|---|---|
| Record # 1 | | |
| Field 1 | Field 2 | Field 3 |
| Device Identifier | Access Station Identifier | Policy for Voice Calls |
| 555-555-5555 | AID₁ | Allow Communication |
| | AID₂ | Allow Communication |
| | AID₃ | Allow Communication |

Table I shows one record, labelled Record 1, which reflects information corresponding to device 58. It should now be apparent that database 118 can include additional records for any additional devices 58 that are included in system 30.

Describing Table I in greater detail, Field 1 contains the unique identifier of device 58, in this case its phone number "555-555-5555". Field 2 contains a list of unique identifiers, AID, associated with access stations 34. Field 3 contains the communications policy of office 62 for each access station 34, in this case simply the decision to either "Allow Communication", or "Disallow Communication". In this case a communication is allowed through access stations AID₁, AID₂ and AID₃. (It should now be apparent that other communications policies (rather than "allow" or "disallow" communication) can be stored in CP databases 118, and 122. For example, the communication policy stored may be to limit the length of the call when device 58 is in range of some access stations and allow limitless calls when in range of others. It should also be apparent that a combination of policies can also be used.)

By the same token, device 58 also includes CP database 122 that includes data corresponding to the information stored in CP database 118. The initial settings of CP database 122 are shown in Table II.

**Table II**

| Example of a CP Database 122 of Device 58 | |
|---|---|
| Field 1 | Field 2 |
| Access Station Identifier | Policy for Voice Calls |
| AID₁ | Allow Communication |
| AlD₂ | Allow Communication |
| AID₃ | Allow Communication |

Field 1 of database 122 corresponds to Field 2 of database 118, and Field 2 of database 122 corresponds to Field 3 of database 118. Because initially, when the user first acquires the device from office 62, device database 122 has the same content as the office database 118.

The policy, as described by CP database 118, is set by office 62 and updated by office 62 from time to time as needed. For example, office 62 may desire that device 58 should place wireless calls through network 50 only when a digital link is available between an access station 34 and device 50 to reduce the chances that the wireless portion of the call is intercepted. According to this policy office 62 would not want device 58 to connect to network 50 through access stations 34₂ or 34₃ since stations 34₂ 34₃ only provide an analog link 42₂ 42₃ based on AMPS which is highly susceptible to interception. Thus, policy database 118 would be updated to reflect the new policy as shown in Table III.

**Table III**

| Example record of an Updated CP Database 118 of Office 62 | | |
|---|---|---|
| Record # 1 | | |
| Field 1 | Field 2 | Field 3 |
| Device Identifier | Access Station Identifier | Policy for Voice Calls |
| 555-555-5555 | AID₁ | Allow Communication |
| | AID₂ | Disallow Communication |
| | AID₃ | Disallow Communication |

Notice that Field 3 associated with AID₂ has been changed to "Disallow Communication" to reflect the new policy that device 58 should not connect to network 50 through access station 34₂.

At this point device database 122 no longer contains the same policies as office database 118. Office 110 is operable to update CP database 122 of device 58 by communicating with device 58 when device 58 connects to network 54.

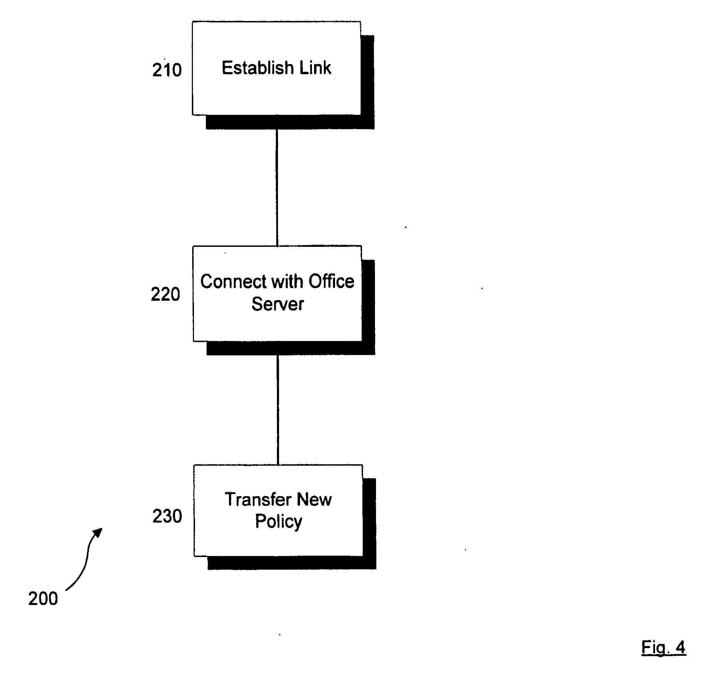

Referring to Figure 4, a method for updating policy database 122 is indicated generally at 200. In order to assist in the explanation of the method, it will be assumed that method 200 is operated using system 30, and that device 58, as shown in Figure 1, is located in range 38₁. Furthermore, the following discussion of method 200 will lead to further understanding of system 30 and its various components. (However, it is to be understood that system 30 and/or method 200 can be varied, and need not work exactly as discussed herein in conjunction with each other, and that such variations are within the scope of the present invention).

Referring back to Figure 4, at step 210 a link is established. As an example of how step 210 can be performed, device 58 establishes link 42₁ with station 34₁ which is serving the range 38₁. Moving to step 220, a connection is made with an office server. Continuing with the example, when step 220 is performed device 58 will use link 42₁ established at step 210 to connect to network 54, and through network 54, will eventually make a connection to office server 110.

Method 200 will then advance from step 220 to step 230, at which point the new policy is transferred. Continuing with the example, database 122 is updated by transferring the new policy to device 58. The updated CP database 122 is shown in Table IV.

**Table I V**

| Example of an Updated CP Database 122 of Device 58 | |
|---|---|
| Field 1 | Field 2 |
| Access Station Identifier | Policy for Voice Calls |
| AID₁ | Allow Communication |
| AID₂ | Disallow Communication |
| AID₃ | Disallow Communication |

To summarize the example, database 122 originally held the contents of Table II, but upon performance of method 200 using the specific example, database 122 now holds the contents of Table IV. Thus, a policy administered from office 62 has remotely changed base stations 34 that are accessible by device 58 from all access stations 34 down to access station 34₁.

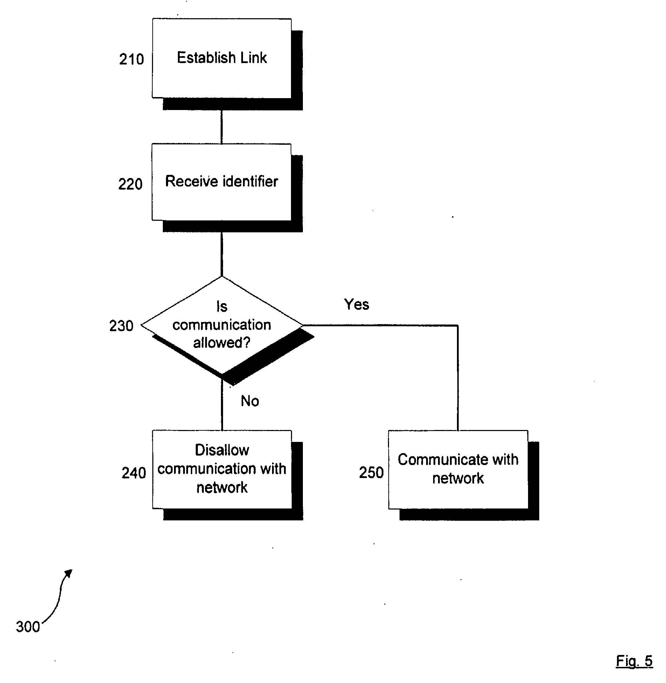

Referring now to Figure 5, a method for placing a wireless call through network 50, according to CP database 122, is indicated generally at 300. In order to assist in the explanation of the method, it will be assumed that method 300 is operated using system 30 and that device 58, as shown in Figure 1, is located in range 38₁. Furthermore, the following discussion of method 300 will lead to further understanding of system 30 and its various components. (However, it is to be understood that system 30 and/or method 300 can be varied, and need not work exactly as discussed herein in conjunction with each other, and that such variations are within the scope of the present invention.)

Referring back to Figure 5, at step 310 a link is established. As an example of how step 310 can be performed, device 58 establishes link 42₁ with station 34₁ which is serving range 38₁. Moving to step 320, an identifier is received. Continuing with the example, when step 320 is performed device 58 receives the identifier associated with an access station 34. In this case, the identifier is AID₁ which is the identifier of access station 34₁.

Method 300 then advances from step 320 to step 330, at which point a determination is made as to whether communication is permissible. In this example, the office policy is examined to determine whether communications through access station 34₁ are permitted. To perform this step, device 58 examines the office policy regarding wireless calls associated with identifier AID₁ in CP database 122. In this case, the policy associated with AID₁ is "Allow Communication". Accordingly, step 350 is performed next and communication is established. Accordingly, in this example, device 58 places a wireless call through network 50.

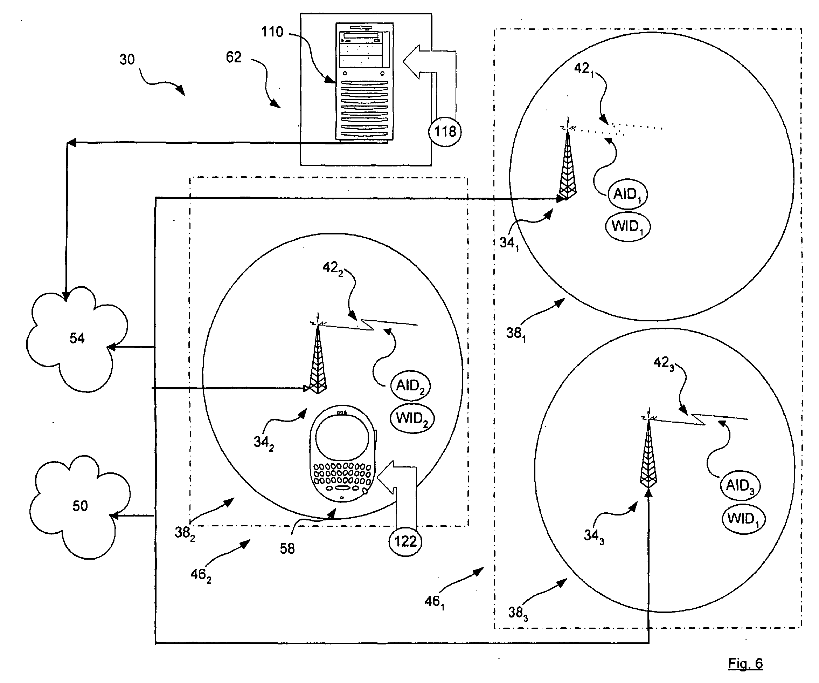

Referring to Figure 6, device 58 now moves to range 38₂, served by access station 42₂. In order to place a wireless call using device 58, according to CP database 122, method 300 is performed a second time.

Referring back to Figure 5, at step 310 a link is established. As an example of how step 310 can be performed during this second performance of method 300, device 58 establishes link 42₂ with station 34₂ which is serving range 38₂. Moving to step 320, an identifier is received. Continuing with the example, when step 320 is performed device 58 receives the identifier associated with access station 34. In this case, the identifier is AID₂ which is the identifier of access station 34₂.

Method 300 then advances from step 320 to step 330, at which point a determination is made as to whether communication is permissible. In this example, the office policy is examined to determine whether communications through access station 34₂ are permitted. To perform this step, device 58 examines the office policy regarding wireless calls associated with identifier AID₁ in CP database 122. In this case, the policy associated with AID₂ is "Disallow Communication", as shown in Field 2 of Table IV. Accordingly, step 340 is performed next and communication is not permitted. Accordingly, in this example device 58 is prevented from placing a call.

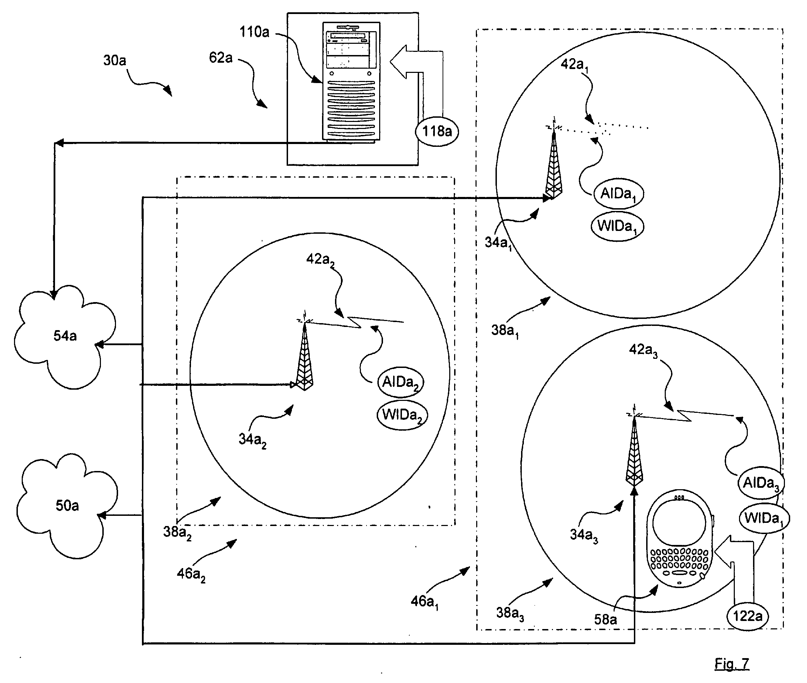

Referring now to Figure 7, a system for secure access in accordance with another embodiment of the invention is indicated generally at 30a. System 30a is substantially the same as system 30, and like elements in system 30a bear the same reference as like elements in system 30, except followed by the suffix "a". System 30a differs from system 30 in that in system 30a different policy databases are used.

In this embodiment, office 62a desires that device 58a place wireless calls through network 50a only using wireless carrier 46a₁ since wireless carrier 46a₁ offers cheaper connections than other carriers 46a. According to this policy, office 62a would not want device 58a to connect to network 50a through access station 34a₂ since station 34a₂ is operated by wireless carrier 46a₂. CP database 118a reflecting this policy is shown in Table V.

**Table V**

| Example record of an Updated CP Database 118a of Office 62a | | |
|---|---|---|
| Record # 1 | | |
| Field 1 | Field 2 | Field 3 |
| Device Identifier | Wireless Carrier Identifier | Policy |
| 555-555-5555 | WID₁ | Allow Communication |
| | WID₂ | Disallow Communication |

Notice that Field 3 associated with WID₂ is set to "Disallow Communication" to reflect the new policy that device 58a should not connect to network 50a through wireless carrier 46a₂. Such a policy that limits communications according to carrier could be desired for a number of reasons, such as reducing or controlling roaming charges, such that a particular device 58a can only perform communications in a home region. Other criteria for setting policies that reside in device 58a which define access stations 34a that are accessible to device 58a will now occur to those of skill in the art.

By the same token, device 58a also includes a CP database 122a that includes data that corresponds with the information stored in connection policy database 18a. Contents of CP database 122a is updated by performing method 200, shown in Figure 4 in substantially the same manner as database 122 in system 30. The updated CP database 122a is shown in Table IV.

**Table VI**

| Example of an Updated CP Database 122a of Device 58a | |
|---|---|
| Field 1 | Field 2 |
| Wireless Carrier Identifier | Policy for Voice Calls |
| WID₁ | Allow Communication |
| WID₂ | Disallow Communication |

Referring back to Figure 7, device 58a is in range 38a₂, served by access station 42a₃. In order to place a wireless call using device 58a, according to CP database 122a, method 300 is performed.

Referring back to Figure 5, at step 310 a link is established. As an example of how step 310 can be performed, device 58a establishes link 42a₃ with station 34a₃ which is serving range 38a₃. Moving to step 320, an identifier is received. Continuing with the example, when step 320 is performed device 58a receives the identifier associated with wireless carrier 46a. In this case, the identifier is WIDa₁ which is the identifier associated with wireless carrier 46a, operating access station 34a₃.

Method 300 then advances from step 320 to step 330, at which point a determination is made as to whether communication is permissible. In this example, the office policy is examined to determine whether communications through access stations operated by wireless carrier 46a₁ are permitted. To perform this step, device 58a examines the office policy regarding wireless calls associated with identifier WIDa₁ in CP database 122a. In this case, the policy associated with WIDa₁ is "Allow Communication", as shown in Field 2 of Table VI. Accordingly, step 350 is performed next and communication is established. Accordingly, in this example, device 58a places a wireless call through network 50a.

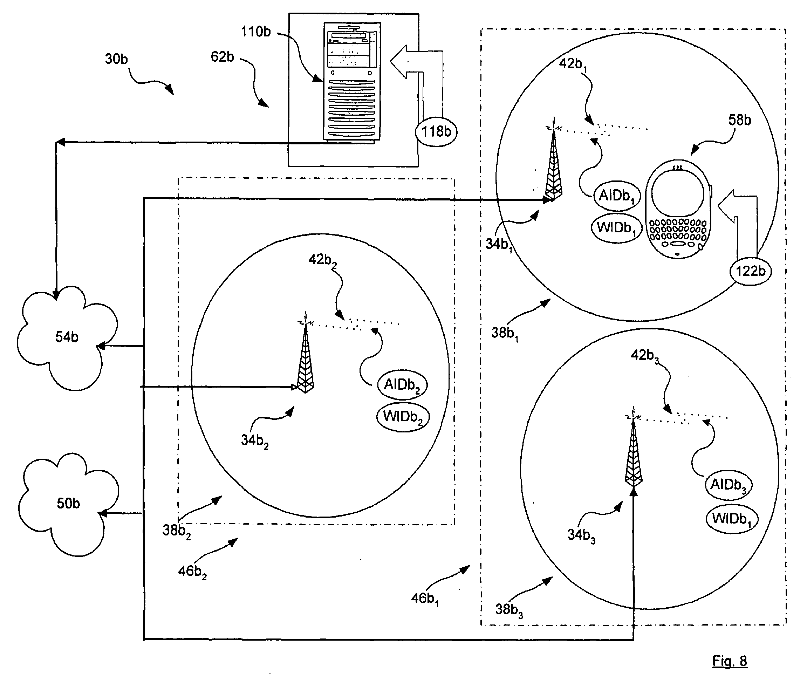

Referring now to Figure 8, a system for secure access in accordance with another embodiment of the invention is indicated generally at 30b. System 30b is substantially the same as system 30, and like elements in system 30b bear the same reference as like elements in system 30, except followed by the suffix "b". System 30b differs from system 30 in that in system 30b all links 42 are digital and that different policy databases are used.

In system 30b office 62b employs CP database 118b which is substantially the same as CP database 118 but has additional fields used for determining which access stations 34b a device 58b can link with in order to connect to different networks when using different applications (e.g. voice calls, web browsing, and e-mail). For example, an additional field is used for determining which access stations 34b a device 58b can link to in order to connect to e-mail through the Internet (network 54b). A further field is used for determining which access stations are linkable for surfing the web through the Internet (network 54b). Table VII shows an example of database 118b of office 62b for device 58b.

**Table VII**

| Example record of a Connection Policy Database 118b of Office 62b | | | | |
|---|---|---|---|---|
| Field 1 | Field 2 | Field 3 | Field 4 | Field 5 |
| Device Identifier | Access Station Identifier | Policy for Voice Calls | Policy for E-mail Through The Internet | Policy for Web-surfing Through The Internet |
| 555-555-5555 | AID₁ | Allow Communication | Allow Communication | Disallow Communication |
| | AID₂ | Allow Communication | Allow Communication | Disallow Communication |
| | AID₃ | Allow Communication | Disallow Communication | Allow Communication |

Table VII shows one record, labelled Record 1, which reflects information corresponding to device 58b. It should now be apparent that database 118b can include additional records for any additional devices 58b that are included in system 30b, or additional fields for additional applications available on device 58b.

Describing Table VII in greater detail, Fields 1 through 3 contain the same information as CP database 118, shown in Table I. Field 4 contains the communications policy of office 62b for each access station 34b, in this case simply the decision to either "Allow Communication", or "Disallow Communication", to be used when device 58b attempts to check e-mail through network 54b. In this case, device 58b can only check e-mail when connected to network 54b through access stations 34b₁ and 34b₂. Note also that device 58b is permitted to place voice calls through any of the access stations 34b.

Continuing with the description of Table VII, Field 5 contains the communications policy of office 62b for each access station 34b, in this case simply the decision to either "Allow Communication", or "Disallow Communication", to be used when device 58b attempts to surf the web through network 54b. In this case device 58b can surf the web only through access stations 34b₃. (It should now be apparent that other communications policies (rather than "allow" or "disallow" communication) can be stored in CP databases 118b, and 122b. For example, a communication policy may limit the data bandwidth when device 58b is in range of some access stations 34b and allow limitless bandwidth when in range of others. It should also be apparent that a combination of policies can also be used.)

Device 58b also includes a CP database 122b that includes data that corresponds with the information stored in connection policy database 118b. CP database 122b is updated by performing method 200, shown in Figure 3 in substantially the same manner as CP database 122 in system 30. The updated CP database 122 is shown in Table VIII.

**Table VIII**

| Example of a CP Database 122b of Device 58b | | | |
|---|---|---|---|
| Field 1 | Field 2 | Field 3 | Field 4 |
| Access Station Identifier | Policy for Voice Calls | Policy for E-mail Through The Internet | Policy for Web-surfing Through The Internet |
| AID₁ | Allow Communication | Allow Communication | Disallow Communication |
| AID₂ | Allow Communication | Allow Communication | Disallow Communication |
| AID₃ | Allow Communication | Disallow Communication | Allow Communication |

Field 1 of database 122b corresponds to Field 2 of database 118b, Field 2 of database 122b corresponds to Field 3 of database 118b, Field 3 of database 122b corresponds to Field 4 of database 118b and Field 4 of database 122b corresponds to Field 5 of database 118b.

Referring back to Figure 8, which gives an example arrangement, device 58b is range 38b₁, served by access station 34₁. When device 58b attempts to access e-mail, method 300 is performed again to determine the permissibility of the e-mail access. Performance of method 300 using system 30b is substantially the same as the performance of method 300 using system30 except that Field 3 of database 122b is used to determine the policy as opposed to using Field 2 to determine the policy for voice calls. In this example, the e-mail policy associated with access station 34b₁ (as identified by AIDb₁) is to allow communications. Thus, device 58b will be able to access e-mail. When device 58b attempts to surf the web, on the other hand, performance of method 300 will disallow access to the web since the policy associated with web surfing in region 38₁ (specified by the first row of Field 4 of Table VIII) is to disallow communication..

While only specific combinations of the various features and components of the present invention have been discussed herein, it will be apparent to those of skill in the art that subsets of the disclosed features and components and/or alternative combinations of these features and components can be utilized, as desired. For example, although GSM and AMPS are wireless communication methods contemplated, it should now be apparent that other wireless communication methods such as the Code Division Multiple Access ("CDMA") for digital connections and the Total Access Communication System ("TACS") for analog connections are all within the scope of the invention. Other methods include General Packet Radio Service ("GPRS"), and Orthogonal Frequency Division Multiplexing ("OFDM"), amongst others.

In another variation, database 122 in system 30 can be updated through a direct connection between device 58 and office server 110. It should now be apparent that this direct connection can take the form of a wired connection such as a Universal Serial Bus ("USB") connection, a cross-linked peer to peer Ethernet connection, or a wireless connection such as a Bluetooth connection, an infrared (IR) connection, or a peer to peer IEEE 801.11 (e.g. 802.11b, 802.11 g or other 802.11 variants) connection. In yet another variation, database 122 could be updated through a Local Area Connection ("LAN") to which both device 58 and office server 110 are connected.

In another variation, different criteria other than location of device 58 can be used for enabling, disabling or otherwise varying the communication capabilities of device 58. For example, time can be used as a determinant of communication capabilities. Accordingly, device 58 and certain applications performing on device 58, such as e-mail, could be allowed to communicate during certain periods of time such as daytime, and certain other applications, such as voice calls, could be able to communicate during other time periods such as night time. These policies can be designed, for example, to take advantage of periods during which certain services are offered at reduced costs by wireless carriers. Thus, office 62 can set up a policy database 118 which allows voice calls only during evenings and weekends when voice calls are cheaper. As another example, policies can be set up to choose between different wireless carriers when each region is served by multiple carriers. So, for example, if a region 38 is served by 2 access stations 34, device 58 can determine which access station to use consulting the communications policy (namely during the performance of method 300). Accordingly, when there is a choice of carriers, policies could be designed to select more secure, less expensive or otherwise more desirable wireless carrier over those carriers that are less secure, more expensive or otherwise less desirable.

In yet another variation, device CP database 122 could be updated using different methodologies. For example, the transfer of CP database 118 could be made selectively, transferring the database only when a difference is found between CP database 118 and 122. It should now be apparent that a variety of different methods could be employed for determining a difference. For example, each field of database 118 can be compared to the equivalent fields in database 122 to determine whether there are any differences. Alternatively, sizes of the database files or the date of modification of these files could be compared. Moreover, the comparison can be done either by office server 110, device 58 or some other computer trusted with maintaining synchronized CP databases between the office and the roaming devices. All these methods, and other methods for determining whether a CP database should be transferred to device 58 are within the scope of this invention.

In other variations, the policy can be stored in forms other than a database such as a lookup table. Moreover, the policy can be stored at a computer other than the office server. For example, the policy can be stored on routers and other dedicated computing devices. Also, the policy could be stored on a computer or other electronic device which is operated by an entity other than the office that operates the mobile devices.

While portions of the foregoing description may individually reference systems 30, 30a, 30b and 30c, it should now be apparent that all or parts of each of these systems can be combined as appropriate or otherwise desired. Accordingly, those of skill in the art will recognize that when certain references are made to one of these systems, and/or its components, such teachings can also be applicable to other ones of those systems.

The above-described embodiments of the invention are intended to be examples of the present invention and alterations and modifications may be effected thereto, by those of skill in the art, without departing from the scope of the invention which is defined solely by the claims appended hereto.

## Claims

1. A method of conducting communications from a subscriber device (58) comprising:
establishing a link (42) with one of a plurality of base stations (34) from said subscriber device (58);
receiving a base station identifier from said one of a plurality of base stations (34) at said subscriber device (58), said identifier being unique to said one of a plurality of base stations (34) in relation to others of said plurality of base stations (34); determining whether communications with said one of a plurality of base stations (34) are permitted based on said identifier; and,
conducting said communications from said subscriber device (58) only if communications are permitted.

2. The method of claim 1 wherein said communications comprise a plurality of different services.

3. The method of claim 2 wherein said services comprise any of voice, emails, internet browsing and/or text messaging.

4. The method of any one of claims 1 to 3 wherein said determining step comprises determining whether one of said services in a specific region (38) associated with said one of a plurality of base stations (34) is allowed.

5. The method of any one of claims 1 to 4 wherein said determining step disallows said communications with at least one of said base stations (34) if communications with said one of a plurality of base stations (34) are to be on a reduced security link (42).

6. The method of any one of claims 1 to 5 wherein said link (42) is a wireless link based on one or more of CDMA, OPDM, AMPS, GSM, GPRS, bluetooth, infra-red and 802.11.

7. The method of any one of claims 1 to 6 wherein said link (42) is a wired link based on Ethernet; USB; Firewire and RS-232.

8. A computer readable storage media (94) storing a set of instructions which, when executed by a computer, cause the computer to perform the method of any one of claims 1 to 7.

9. A subscriber device (58) for conducting communications with a base station (34), the subscriber device comprising:
means (106) for establishing a link with one of a plurality of base stations (34);
means (106) for receiving a base station identifier from said one of a plurality of base stations (34), said identifier being unique to said one of a plurality of base stations (34) in relation to others of said plurality of base stations;
means (90) for determining whether communications with said one of a plurality of base stations (34) are permitted based on said identifier;
wherein the subscriber device (58) is arranged to conduct said communications only if communications are permitted.

10. A system (30) for conducting communications between a subscriber device (58) and a base station (34), the system comprising:
a plurality of base stations (34); and
at least one subscriber device (58), said subscriber device (58) comprising;
means (106) for establishing a link with one of a plurality of base stations (34);
means (106) for receiving a base station identifier from said one of a plurality of base stations (34), said identifier being unique to said one of a plurality of base stations (34) in relation to others of said plurality of base stations;
means (90) for determining whether communications with said one of a plurality of base stations (34) are permitted based on said identifier;
wherein the subscriber device (58) is arranged to conduct said communications only if communications are permitted.

## Patentansprüche

1. Verfahren zur Kommunikationsdurchführung ausgehend von einer Teilnehmervorrichtung (58), das Folgendes umfasst:
Herstellen einer Verbindung (42) mit einer einer Vielzahl von Basisstationen (34) ausgehend von der Teilnehmervorrichtung (58);
Empfangen eines Basisstationsetiketts von der einen einer Vielzahl von Basisstationen (34) an der Teilnehmervorrichtung (58), wobei das Etikett für die eine einer Vielzahl von Basisstationen (34) im Verhältnis zu anderen der Vielzahl von Basisstationen (34) eindeutig ist;
Ermitteln, ob basierend auf dem Etikett die Kommunikation mit der einen einer Vielzahl von Basisstationen (34) zulässig ist; und
Durchführen der Kommunikation ausgehend von der Teilnehmervorrichtung (58) nur dann, wenn die Kommunikation zulässig ist.

2. Verfahren nach Anspruch 1, wobei die Kommunikation eine Vielzahl von unterschiedlichen Diensten umfasst.

3. Verfahren nach Anspruch 2, wobei die Dienste Sprach-, Email-, Internetbrowsing- und/oder Textmitteilungsdienste umfassen.

4. Verfahren nach einem der Ansprüche 1 bis 3, wobei der Ermittlungsschritt die Ermittlung umfasst, ob einer der Dienste in einer spezifischen Region (38), die zu der einen einer Vielzahl von Basisstationen (34) gehört, zulässig ist.

5. Verfahren nach einem der Ansprüche 1 bis 4, wobei der Ermittlungsschritt die Kommunikation mit mindestens einer der Basisstationen (34) nicht zulässt, wenn die Kommunikation mit der einen einer Vielzahl von Basisstationen (34) über eine Verbindung (42) mit verringerter Sicherheit durchgeführt werden soll.

6. Verfahren nach einem der Ansprüche 1 bis 5, wobei die Verbindung (42) eine drahtlose Verbindung ist, die auf CDMA, OFDM, AMPS, GSM, GPRS, Bluetooth, Infrarot und/oder 802.11 basiert.

7. Verfahren nach einem der Ansprüche 1 bis 6, wobei die Verbindung (42) eine verdrahtete Verbindung ist, die auf Ethernet, USB, Firewire und RS-232 basiert.

8. Computerlesbares Speichermedium (94), das einen Satz von Befehlen speichert, die, wenn sie von einem Computer ausgeführt werden, den Computer veranlassen, das Verfahren nach einem der Ansprüche 1 bis 7 auszuführen.

9. Teilnehmervorrichtung (58) zur Kommunikationsdurchführung mit einer Basisstation (34), wobei die Teilnehmervorrichtung Folgendes umfasst:
Mittel (106) zum Herstellen einer Verbindung mit einer einer Vielzahl von Basisstationen (34);
Mittel (106) zum Empfangen eines Basisstationsetiketts von der einen einer Vielzahl von Basisstationen (34), wobei das Etikett für die eine einer Vielzahl von Basisstationen (34) im Verhältnis zu anderen der Vielzahl von Basisstationen eindeutig ist;
Mittel (90) zum Ermitteln, ob basierend auf dem Etikett die Kommunikation mit der einen einer Vielzahl von Basisstationen (34) zulässig ist;
wobei die Teilnehmervorrichtung (58) dafür ausgelegt ist, die Kommunikation nur dann durchzuführen, wenn die Kommunikation zulässig ist.

10. System (30) zur Kommunikationsdurchführung zwischen einer Teilnehmervorrichtung (58) und einer Basisstation (34), wobei das System Folgendes umfasst:
eine Vielzahl von Basisstationen (34); und
mindestens eine Teilnehmervorrichtung (58), wobei die Teilnehmervorrichtung (58) Folgendes umfasst;
Mittel (106) zum Herstellen einer Verbindung mit einer einer Vielzahl von Basisstationen (34);
Mittel (106) zum Empfangen eines Basisstationsetiketts von der einen einer Vielzahl von Basisstationen (34), wobei das Etikett für die eine einer Vielzahl von Basisstationen (34) im Verhältnis zu anderen der Vielzahl von Basisstationen eindeutig ist;
Mittel (90) zum Ermitteln, ob basierend auf dem Etikett die Kommunikation mit der einen einer Vielzahl von Basisstationen (34) zulässig ist;
wobei die Teilnehmervorrichtung (58) dafür ausgelegt ist, die Kommunikation nur dann durchzuführen, wenn die Kommunikation zulässig ist.

## Revendications

1. Une méthode destinée à conduire des communications à partir d'un dispositif d'abonné (58) comportant :
établir une liaison (42) avec une station de base parmi une pluralité de stations de base (34) à partir dudit dispositif d'abonné (58) ;
recevoir un identificateur de station de base de ladite une station de base parmi une pluralité de stations de base (34) au niveau dudit dispositif d'abonné (58), ledit identificateur étant unique à ladite une station de base parmi une pluralité de stations de base (34) par rapport aux autres stations de base de ladite pluralité de stations de base (34) ;
déterminer si les communications avec ladite une station de base parmi une pluralité de stations de base (34) sont permises sur la base dudit identificateur ; et
conduire lesdites communications à partir dudit dispositif d'abonné (58) seulement si les communications sont permises.

2. La méthode de la revendication 1, dans laquelle lesdites communications comportent une pluralité de services différents.

3. La méthode de la revendication 2, dans laquelle lesdits services comportent n'importe quel service parmi des services vocaux, de messagerie électronique, de navigation internet et/ou de messagerie textuelle.

4. La méthode de n'importe laquelle des revendications 1 à 3, dans laquelle ladite étape de détermination comporte de déterminer si l'un desdits services dans une région spécifique (38) associée à ladite une station de base parmi une pluralité de stations de base (34) est autorisé.

5. La méthode de n'importe laquelle des revendications 1 à 4, dans laquelle ladite étape de détermination rejette lesdites communications avec au moins une station de base parmi lesdites stations de base (34) si les communications avec ladite une station de base parmi une pluralité de stations de base (34) doivent se faire sur une liaison à sécurité réduite (42).

6. La méthode de n'importe laquelle des revendications 1 à 5, dans laquelle ladite liaison (42) est une liaison sans fil basée sur une technologie ou plusieurs parmi les technologies suivantes : CDMA, OFDM, AMPS, GSM, GPRS, Bluetooth, infrarouge et 802.11.

7. La méthode de n'importe laquelle des revendications 1 à 6, dans laquelle ladite liaison (42) est une liaison filée basée sur Ethernet ; USB ; Firewire et RS-232.

8. Un support de stockage lisible par ordinateur (94) stockant un ensemble d'instructions qui, lorsqu'elles sont exécutées par un ordinateur, font réaliser à l'ordinateur la méthode de n'importe laquelle des revendications 1 à 7.

9. Un dispositif d'abonné (58) destiné à conduire des communications avec une station de base (34), le dispositif d'abonné comportant :
un moyen (106) destiné à établir une liaison avec une station de base parmi une pluralité de stations de base (34) ;
un moyen (106) destiné à recevoir un identificateur de station de base de ladite une station de base parmi une pluralité de stations de base (34), ledit identificateur étant unique à ladite une station de base parmi une pluralité de stations de base (34) par rapport aux autres stations de base de ladite pluralité de stations de base ;
un moyen (90) destiné à déterminer si les communications avec ladite une station de base parmi une pluralité de stations de base (34) sont permises sur la base dudit identificateur ;
où le dispositif d'abonné (58) est agencé pour conduire lesdites communications seulement si les communications sont permises.

10. Un système (30) destiné à conduire des communications entre un dispositif d'abonné (58) et une station de base (34), le système comportant :
une pluralité de stations de base (34) ; et
au moins un dispositif d'abonné (58), ledit dispositif d'abonné (58) comportant :
un moyen (106) destiné à établir une liaison avec une station de base parmi une pluralité de stations de base (34) ;
un moyen (106) destiné à recevoir un identificateur de station de base de ladite une station de base parmi une pluralité de stations de base (34), ledit identificateur étant unique à ladite une station de base parmi une pluralité de stations de base (34) par rapport aux autres stations de base de ladite pluralité de stations de base ; un moyen (90) destiné à déterminer si les communications avec ladite une station de base parmi une pluralité de stations de base (34) sont permises sur la base dudit identificateur ;
où le dispositif d'abonné (58) est agencé pour conduire lesdites communications seulement si les communications sont permises.
